# EUROPEAN PATENT APPLICATION

(11) **EP 3 242 108 A1**
(43) Date of publication of application: **08.11.2017**
(21) Application number: 17169571.1
(22) Date of filing: 04.05.2017
(51) Int. Cl.: G01B 11/00, B25J 9/16

(54) **INFORMATION PROCESSING APPARATUS, INFORMATION PROCESSING METHOD, PROGRAM, SYSTEM, AND ARTICLE MANUFACTURING METHOD**

(30) Priority: 06.05.2016 JP 2016093306
(71) Applicant: Canon Kabushiki Kaisha, Tokyo 146-8501 (JP)
(72) Inventor: MATSUURA, Hiroshi, Ohta-ku, Tokyo (JP)
(74) Representative: Perkins, Dawn Elizabeth

(57) **Abstract**

An information processing apparatus (1) includes a first processor (30) configured to execute processing of obtaining information of a distance of a measurement target, and a second processor (30) configured to obtain information of a distance between each of reference surfaces which represent a region, on which an object can be placed, and each of distance measurement points at which the information of the distance is obtained by the first processor, and execute processing of determination of whether any of the object are placed on the region.

## Description

### BACKGROUND OF THE INVENTION

### Field of the Invention

The present invention relates to an information processing apparatus, an information processing method, a program, a system, and an article manufacturing method.

### Description of the Related Art

There has been known an information processing apparatus (recognition apparatus) which captures an image of a target object (object) such as a work placed in a receptacle or container or a palette and estimates a position and an orientation (posture) of the target object with high precision based on information such as an image of a measurement target including the target object and a distance measurement value. The information about the position and the orientation of the target object is transmitted to a control unit of a robot, so that the robot uses the information to supply or assemble components. It is preferable that a system including the above-described robot have a function for determining when there are no more target objects remaining in a container or a region i.e. the container is empty (also referred to as "emptiness determination"). In the emptiness determination processing, a distance between each of surfaces on which the target objects can be placed and a distance measurement point is obtained, and non-existence of the target objects can be determined when a sum of the distances does not exceed a threshold value (see Japanese Patent Application Laid-Open No. 2015-197312).

In the information processing apparatus discussed in Japanese Patent Application Laid-Open No. 2015-197312, a surface on which the target objects can be placed (e.g., a bottom surface of a container) is assumed as a single plane surface. However, the surface is not necessarily a single plane surface. For example, an inverted conical-shaped container having a side wall sloping toward the central portion of the container may be used so that the target objects are placed at the central portion of the container. Further, a container having projections serving as a slip prevention structure at an inner bottom surface of the container may be used so as to prevent the target objects from slipping. If the emptiness determination processing is executed when the above-described containers are used, a surface (also referred to as "reference surface") for obtaining a distance to a distance measurement point cannot be set uniquely. If one reference surface is selected, a result of the emptiness determination will be changed depending on the selected reference surface. A distance measurement point with respect to a surface of the container other than the reference surface is recognized as a distance measurement point away from the reference surface. As a result, there may be a case where the information processing apparatus cannot determine that the container is empty even if the target objects do not exist in the container.

### SUMMARY OF THE INVENTION

The present invention is directed to, for example, an information processing apparatus advantageous in determining whether an object does not exist on a region where the object can be placed.

According to a first aspect of the present invention, there is provided an information processing apparatus as specified in claims 1 to 13. According to a second aspect of the present invention, there is provided an information processing method as specified in claim 14. According to a third aspect of the present invention, there is provided a program as specified in claim 15. According to a fourth aspect of the present invention, there is provided a system as specified in claim 16. According to a fifth aspect of the present invention, there is provided a method of manufacturing an article as specified in claim 17.

Further features of the present invention will become apparent from the following description of exemplary embodiments with reference to the attached drawings.

### BRIEF DESCRIPTION OF THE DRAWINGS

Fig. 1 is a diagram illustrating a configuration example of a system including an information processing apparatus.
Fig. 2 is a block diagram illustrating a configuration example of the information processing apparatus.
Figs. 3A, 3B, 3C, and 3D are diagrams illustrating a palette and emptiness determination processing according to a first exemplary embodiment.
Fig. 4 is a flowchart illustrating a flow of processing executed by the information processing apparatus.
Figs. 5A, 5B, 5C, and 5D are diagrams illustrating a palette and emptiness determination processing according to a second exemplary embodiment.
Fig. 6 is a flowchart illustrating a flow of processing for obtaining a nearest neighbor distance with respect to each distance measurement point.

### DESCRIPTION OF THE EMBODIMENTS

Hereinafter, exemplary embodiments of the present invention will be described with reference to the appended drawings. Basically, unless otherwise specified, the same reference numerals are applied to the same members illustrated in respective drawings for describing the exemplary embodiments, and repetitive description of the same members will be omitted.

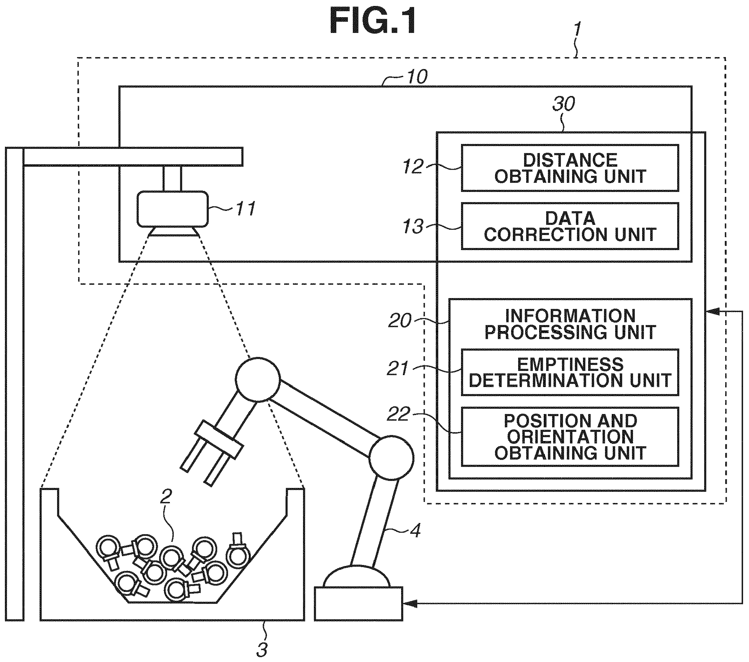

A first exemplary embodiment will be described below. Fig. 1 is a diagram illustrating a configuration example of a system including an information processing apparatus. In Fig. 1, an information processing apparatus 1 includes a distance measuring apparatus 10 (simply referred to as "measuring apparatus") that measures a distance to a measurement target including a component 2 (also referred to as "work" or "object") and a palette 3 serving as a container for containing the component 2. Further, the information processing apparatus 1 includes an information processing unit 20 for executing information processing based on an output of the distance measuring apparatus 10. The information processing apparatus 1 further includes a controller 30 for executing control processing or analysis processing of the operation executed by the distance measuring apparatus 10 and the information processing unit 20. The distance measuring apparatus 10 includes a three-dimensional information obtaining unit 11 (also simply referred to as "measuring device") and a distance obtaining unit 12, and may further include a data correction unit 13 depending on required measurement precision. The three-dimensional information obtaining unit 11 is a device for measuring a measurement target and obtaining measurement data, and the distance obtaining unit 12 is a device for obtaining distance information (three-dimensional information) of the measurement target based on the measurement data. For example, the three-dimensional information obtaining unit 11 may include a so-called time of flight (TOF) sensor. Alternatively, the three-dimensional information obtaining unit 11 may include a stereo camera having two cameras (imaging devices). Further, the three-dimensional information obtaining unit 11 may include a pattern projection unit (projector) and a camera (imaging device), so as to obtain an imaging result (image data) of the target object on which a pattern is projected. A pattern projected through a spatial coding method or a phase shifting method may be used. Alternatively, the three-dimensional information obtaining unit 11 includes a slit light projection unit and an imaging device, so as to obtain data according to an optical cutting method (light sectioning method). Further, the three-dimensional information obtaining unit 11 includes a device (imaging device) for obtaining one-dimensional or two-dimensional information, and obtains data by relatively scanning the target object and the device.

The distance obtaining unit 12 which constitutes a first processor is configured of a processing unit such as a central processing unit (CPU), and may be attached to the three-dimensional information obtaining unit 11 or included in the controller 30. The distance obtaining unit 12 obtains three-dimensional information (distance information) based on the measurement data obtained through an analysis method corresponding to the measurement method of the three-dimensional information obtaining unit 11. A data correction unit 13 which constitutes the first processor together with the distance obtaining unit 12 corrects the three-dimensional information obtained by the distance obtaining unit 12 and eliminates a distance measurement point with low reliability. For example, the above correction includes correction of measurement data based on the information relating to aberration of an optical system included in the three-dimensional information obtaining unit 11. Further, in the above elimination of the distance measurement point, for example, a distance measurement point is eliminated from subsequent recognition processing if a distance measurement value obtained from that distance measurement point exceeds a threshold value and considerably deviates from the peripheral distance measurement values. In addition, the three-dimensional information may be information about a distance (i.e., range image) from a reference point within the distance measuring apparatus 10 or information indicating a three-dimensional coordinate. The above-described control processing or analysis processing of the operation of the distance measuring apparatus 10 is executed by the controller 30.

The controller 30 is connected to a robot 4 for gripping the component 2. The information processing unit 20 has functions for executing analysis based on the three-dimensional information obtained by the distance measuring apparatus 10 and notifying (transmitting) the analysis result to the robot 4. The information processing unit 20 includes an emptiness determination unit 21 which constitutes a second processor and a position and orientation obtaining unit 22.

The emptiness determination unit 21 executes determination (also referred to as "emptiness determination") of whether any components 2 exist in a region such as a palette 3 (container) where the components 2 can be placed (i.e., whether there are no components 2 left in the palette and the palette 3 is empty). When no components 2 exist in the region (i.e., the palette 3 is empty), the information processing apparatus 1 notifies the user that the palette is empty and prompts the user to replenish the components 2 via a display unit described below. In a case where the component 2 is directly placed in a region on a floor or a table without a container, emptiness determination can be executed if the following processing is performed by treating a surface of the region within a measurement (imaging) viewing field as a bottom surface of the container.

For example, the position and orientation obtaining unit 22 executes fitting of shape information of the component 2 with respect to the distance measurement point of the component 2, so as to obtain a position and an orientation (posture) of the component 2 (e.g., the information (coordinates) relating to three translational degrees of freedom and three rotational degrees of freedom). The position and the orientation can be precisely estimated through the fitting, so that the robot 4 can execute processing of gripping the component 2 with high precision. Further, the position and orientation obtaining unit 22 may obtain a position and an orientation of the robot (hand) 4 that processes the component 2 based on the position and the orientation of the component 2. Further, based on the shape information of the robot (hand) 4, the position and orientation obtaining unit 22 may determine whether the robot 4 can process the component 2 without interfering with the surroundings of the component 2. Further, for example, the robot 4 may include a hand for holding the component 2 with a magnetic force or a suction force. Furthermore, the robot 4 may include a hand for holding the component 2 through movement of a plurality of fingers. A robot hand of any type may be used as long as the robot hand functions as an end effector attachable to the arm of the robot 4.

The controller 30 includes the distance obtaining unit 12, the data correction unit 13, and the information processing unit 20, so as to obtain data necessary for information processing and notify (transmit) a result of the information processing. For example, the controller 30 also includes a function of notifying a result obtained by the information processing unit 20 to the control unit of the robot 4.

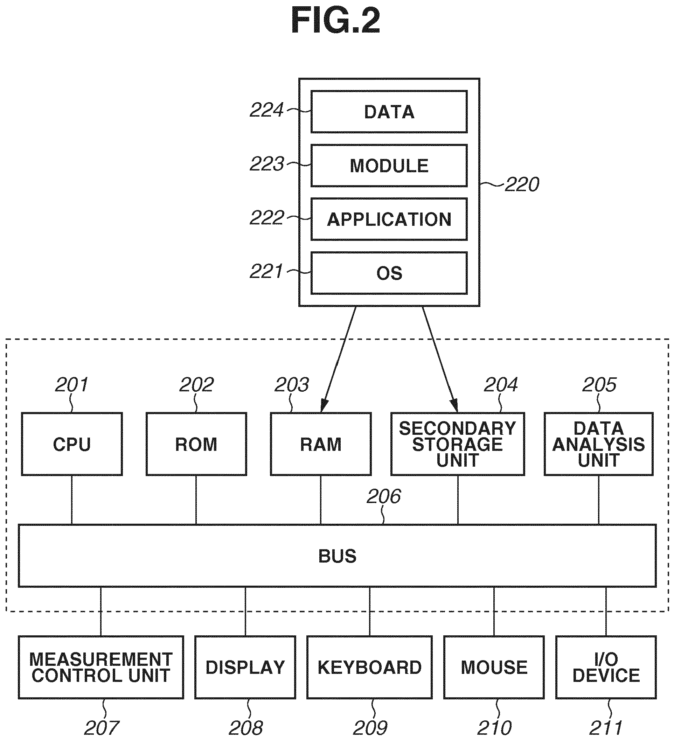

Fig. 2 is a block diagram illustrating a configuration example of the information processing apparatus 1. The configuration of the information processing apparatus 1 is not limited to a configuration of a general-purpose system such as a personal computer (PC) as illustrated in Fig. 2, but may be a configuration of an embedded system or a distributed system established via a network. In Fig. 2, a CPU 201 executes information processing or device control according to a program. A read only memory (ROM) 202 is a non-volatile memory which stores a program necessary for executing initial operation of the information processing apparatus 1. A random access memory (RAM) 203 and a secondary storage unit 204 stores information 220 used by the CPU 201. For example, the information 220 includes an operating system (OS) 221, an application 222, a module 223, and data 224. A data analysis unit 205 is a hardware circuit dedicated to at least a part of the processing executed by the distance obtaining unit 12, the emptiness determination unit 21, and the position and orientation obtaining unit 22. In addition, the entire processing may be executed by a program executed by the CPU 201 without having the data analysis unit 205. However, such a configuration may be disadvantageous in terms of the processing speed although it is advantageous in terms of the cost.

The above-described hardware devices 201 to 205 transmit and receive information via a bus 206. A measurement control unit 207, a display 208, a keyboard 209, a mouse 210, and an input/output (I/O) device 211 are connected to the bus 206. The measurement control unit 207 includes a dedicated interface (I/F) for connecting to the three-dimensional information obtaining unit 11 and executing measurement timing control. The display 208 displays information such as a processing result. For example, the display 208 displays a result of emptiness determination indicating non-existence of the component 2. In addition, the information does not have to be displayed visually but may be provided through another sense such as an auditory sense. The keyboard 209 and the mouse 210 are used when the user inputs an instruction. The I/O device 211 is used for fetching new data or registration data. In the present exemplary embodiment, three-dimensional information is required as input data, and thus the three-dimensional information obtaining unit 11 is included as an input device. In a case where two-dimensional image data is fetched as data or auxiliary data for obtaining the three-dimensional information, the three-dimensional information obtaining unit 11 includes a camera (imaging device) for imaging the object. The output device connected to the I/O device 211 includes a device for outputting a result of information processing to another information processing apparatus. For example, a result of information processing may be output to the control unit of the robot 4. Based on the result (i.e., information about a position and an orientation), the robot 4 executes processing of the component 2 such as taking out the component 2 from the palette 3.

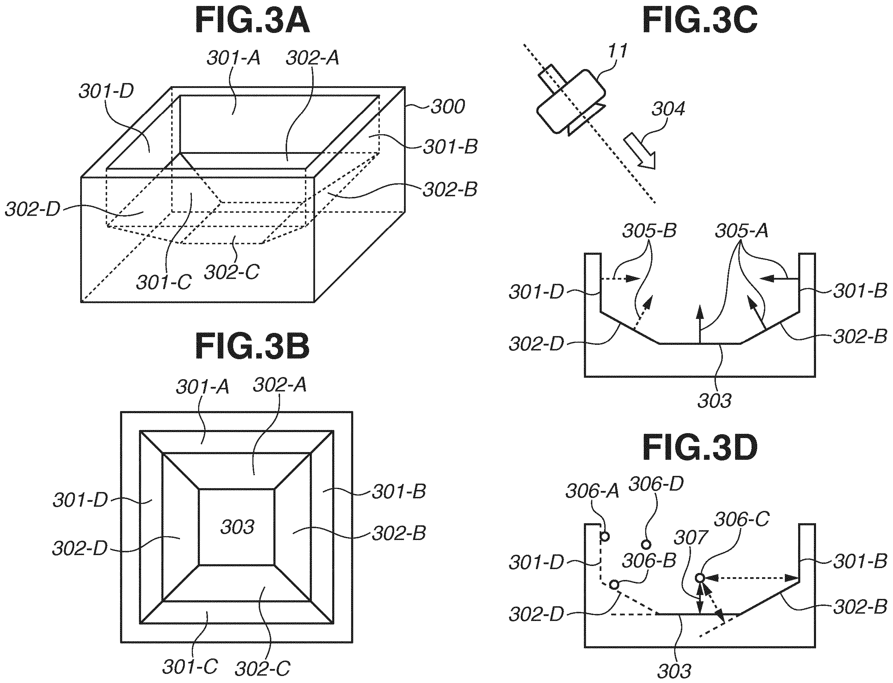

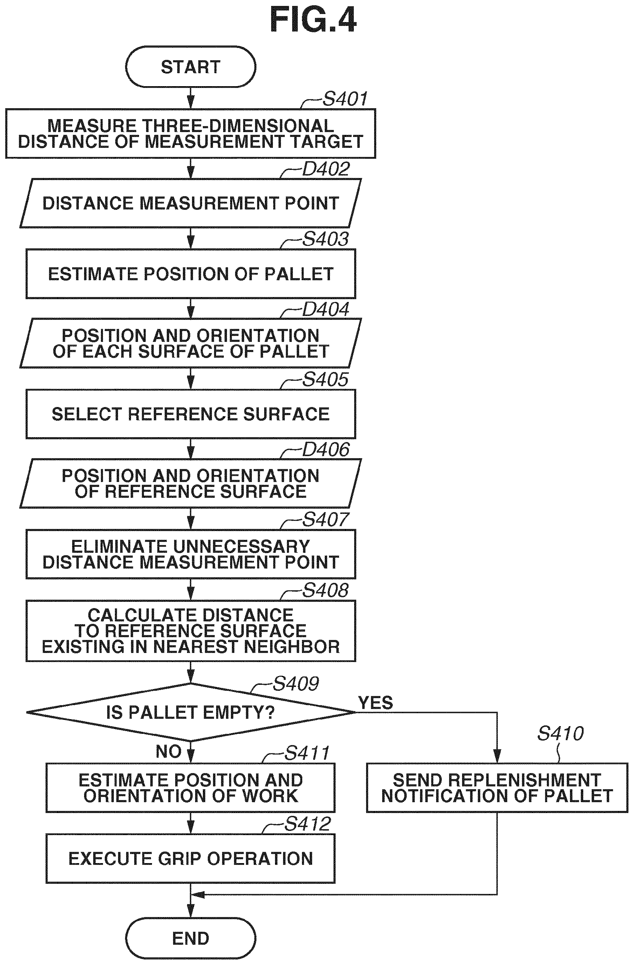

Next, a flow of processing according to the present exemplary embodiment will be described with reference to Figs. 3A, 3B, 3C, and 3D, and Fig. 4. Figs. 3A, 3B, 3C, and 3D are diagrams illustrating a palette and emptiness determination processing according to a first exemplary embodiment. Fig. 3A is a diagram illustrating a perspective view of a palette model, Fig. 3B is a diagram illustrating a top plan view of the palette model, Fig. 3C is a diagram illustrating a cross-sectional view of the palette model, and Fig. 3D is a diagram illustrating a positional relationship between the palette model and a distance measurement point. Herein, a palette model 300 is a model which expresses the palette 3 as an aggregation of surfaces through computer-aided design (CAD) or polygons, in which a detailed structure or a fine concavo-convex texture of the palette 3 is ignored or simplified. An inner side of the palette model 300 is configured of nine plane surfaces, i.e., four vertical surfaces 301 (301-A, 301-B, 301-C, and 301-D), four inclined surfaces 302 (302-A, 302-B, 302-C, and 302-D), and a horizontal surface 303. A solid arrow and a dashed arrow respectively indicate orientations 305-A and 305-B of normal lines of the plane surfaces, although the arrows indicating orientations of the plane surfaces that are not illustrated in Fig. 3C are not illustrated. Herein, a line-of-sight vector 304 (also referred to as "optical axis vector" or simply referred to as "optical axis") indicates an orientation of a line-of-sight or an optical axis of the three-dimensional information obtaining unit 11. The orientations 305-A of respective surfaces of the palette model 300 roughly confront the line-of-sight vector 304, whereas the orientations 305-B thereof do not roughly confront the line-of-sight vector 304. The orientations of the vertical surface 301-B, the inclined surfaces 302-A, 302-B, 302-C, and the horizontal surface 303 are the orientations 305-A, whereas the orientations of the vertical surfaces 301-A, 301-C, 301-D, and the inclined surface 302-D are the orientations 305-B.

Distance measurement points 306 (306-A, 306-B, 306-C, and 306-D) are distance measurement points obtained by the distance obtaining unit 12. The distance measurement points 306-A and 306-B correspond to points on the inner surfaces of the palette 3 and belong to the surfaces of the palette model 300. On the other hand, the distance measurement points 306-C and 306-D correspond to points on the surfaces of the components 2 stored in the palette 3, so that the distance measurement points 306-C and 306-D are separated from the surfaces of the palette model 300 and placed in the air.

Fig. 4 is a flowchart illustrating a flow of the processing executed by the information processing apparatus 1. In step S401 in Fig. 4, based on an instruction from the control unit of the robot 4 or the user, the information processing apparatus 1 obtains data of a distance measurement point D402 as three-dimensional information of a measurement target object. The data of the distance measurement point D402 may be data obtained after the data correction unit 13 corrects a measurement point or eliminates a measurement point with low reliability.

In step S403, the information processing apparatus 1 executes fitting of the palette model 300 with respect to the distance measurement point D402 and obtains a position and an orientation of the palette model 300. In many cases, it is preferable that fitting be performed with respect to an upper rim portion that surrounds an opening portion of the palette model 300. This is because the upper rim portion is less likely to be obstructed even if the works 2 are placed within the palette 3 in bulk. Naturally, the fitting may be performed with respect to another unobstructed portion of the palette 3 in addition to the upper rim portion. Further, the position and the orientation of the palette 3 may be obtained by analyzing a luminance gradient of two-dimensional image data obtained by the camera. Furthermore, information about the position and the orientation of the palette 3 may be used as is if the information thereof is already known or directly specified by the user. When the information about the position and the orientation of the palette model 300 is obtained, the information processing apparatus 1 can obtain (generate) data D404 of a position and an orientation of each surface of the palette 3 based on prior information about a structure of the palette model 300.

In step S405, the information processing apparatus 1 generates (sets or selects) data D406 of positions and orientations of a plurality of reference surfaces used as references in the emptiness determination processing. The reference surfaces are surfaces which represent regions where the component 2 can be placed. The plurality of reference surfaces is generated (set) based on a shape of an inner surface of the palette model 300. In many cases, it is desirable that the reference surface intersect with the line-of-sight vector 304 at an angle within a range of approximately 60-degree to 120-degree. This is because measurement precision of the distance measurement points in the surfaces set as the above (i.e., the vertical surface 301-B, the inclined surfaces 302-A, 302-B, 302-C, and the horizontal surface 303) is high, and thus deficiency of data caused by noise reduction processing executed by the data correction unit 13 is less likely to occur. Further, a surface having a normal line direction that forms an angle smaller than a threshold value with respect to a direction opposite to a gravitational direction may be set as the reference surface. With the above setting, the surface on which the components 2 decreased in number are likely to be placed is selected, and thus a possibility of making an erroneous emptiness determination can be suppressed comparatively. For example, the threshold value may be an upper limit value of an angle of the surface from which the component 2 will not fall.

In step S407, the information processing apparatus 1 eliminates unnecessary distance measurement points that are not used for the emptiness determination. The distance measurement points 306-A and 306-B are the points existing in the vertical surface 301-D and the inclined surface 302-B regarded as non-reference surfaces. Thus, in order not to make an erroneous emptiness determination, it is desirable that the distance measurement points 306-A and 306-B be eliminated. Therefore, it is preferable that a distance measurement point a distance from which to any one of the non-reference surfaces is less than a threshold value be eliminated.

In step S408, with respect to each of the distance measurement points, a distance (nearest neighbor distance) to a reference surface existing in a nearest neighbor is obtained. Because the five surfaces (the vertical surface 301-B, the inclined surfaces 302-A, 302-B, 302-C, and the horizontal surface 303) set as the reference surfaces are placed (connected) so as to make optional two surfaces mutually form a reentrant angle, a reference surface having a minimum distance to the distance measurement point always exists in the nearest neighbor thereof. Accordingly, a minimum value of a distance between each reference surface and the distance measurement point may be obtained. Accordingly, of the five reference surfaces, the horizontal surface 303 is a reference surface existing in the nearest neighbor of the distance measurement point 306-C, and thus a nearest neighbor distance thereof is a nearest neighbor distance 307.

In step S409, if a sum of nearest neighbor distances 307 of respective distance measurement points does not exceed a threshold value, the information processing apparatus 1 determines that the component 2 does not exist (i.e., the palette 3 is empty). On the contrary, if the sum of the nearest neighbor distances 307 exceeds the threshold value, the information processing apparatus 1 determines that the component 2 exists. An amount used for the above determination may be another statistic such as an average value or a standard deviation of the nearest neighbor distances 307, or another statistic obtained from a histogram of the nearest neighbor distances 307 instead of the sum of the nearest neighbor distances 307. In addition, in order to find out a region where the component 2 exists, the above-described emptiness determination may be executed at each of regions obtained by dividing a target region of the emptiness determination. The region is divided so as to make measurement points in nearby positions (coordinates) in a two-dimensional image obtained by the three-dimensional information obtaining unit 11 belong to the same region. If all of the regions are determined as "empty", the information processing apparatus 1 can determine that the component 2 does not exist in the palette 3 (i.e., the palette 3 is empty).

A distance or a nearest neighbor distance between each reference surface and the distance measurement point may take a negative value. In other words, a positive or a negative numeral can be defined based on which side of the reference surface the distance measurement point exists. The negative numeral may be defined when the measurement point exists in an opposite side of the three-dimensional information obtaining unit 11 with respect to the reference surface. In this case, a distance having a negative value is treated as a value of low reliability (i.e., reliability of the measurement point is evaluated based on the numeral, e.g., a measurement point having a negative numeral is eliminated), and thus the emptiness determination can be performed more precisely.

Further, a region of the reference surface having a boundary that is not adjacent to another reference surface may be expanded beyond a boundary of the surface included in the palette 3 within a range which does not have an influence on the emptiness determination function. For example, if a region of the vertical surface 301-B regarded as one of the reference surfaces is expanded upward the palette 3, a distance measurement point on the upper end portion of the palette 3 exists in the outside of the vertical surface 301-B, and thus the distance measurement point is recognized as a distance measurement point of a negative distance. Therefore, such a distance measurement point not necessary for the emptiness determination can be eliminated.

In the above step S409, if the palette 3 is determined as empty (YES in step S409), the processing proceeds to step S410. In step S410, the information processing apparatus 1 notifies the display 208 or the robot 4 of emptiness of the palette 3 to prompt replenishment of the components 2 or replacement of the palette 3. If the information processing apparatus 1 determines that the palette 3 is not empty (NO in step S409), the processing proceeds to step S411. In step S411, based on the distance measurement point D402, the information processing apparatus 1 estimates the position and the orientation of the component 2 placed on the palette 3. In step S412, a result of the above estimation is notified to the robot 4, so that the robot 4 takes out the component 2 from the inside of the palette 3 based on the result.

As described above, according to the present exemplary embodiment, it is possible to provide an information processing apparatus favorable for determining whether an object does not exist in a region where the object can be placed.

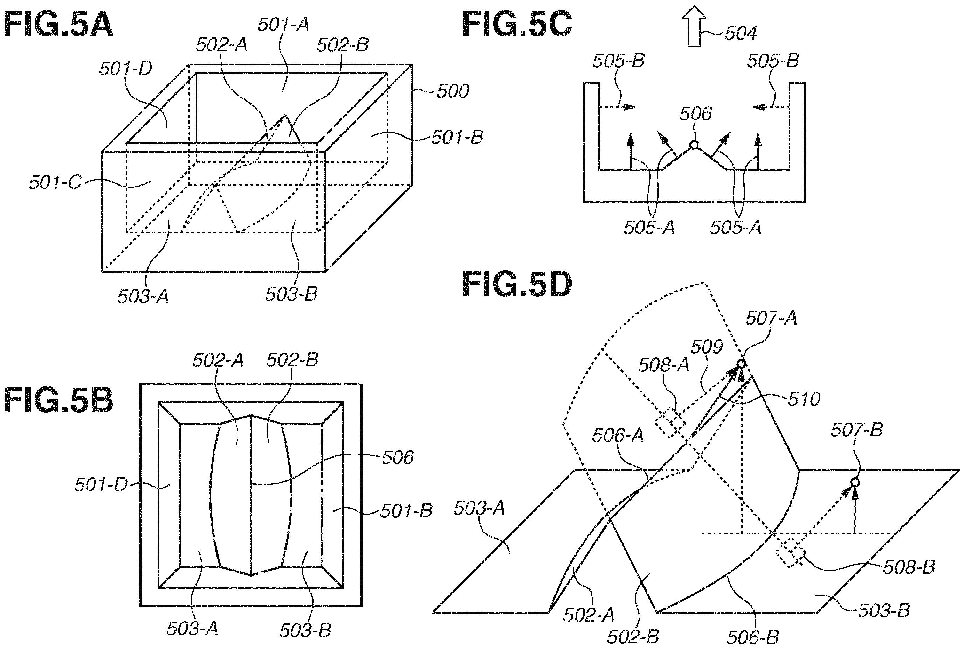

In a second exemplary embodiment, description will be given to a palette (model) having a portion at which reference surfaces (optional two surfaces) are mutually placed (connected) to form a salient angle with curved surfaces. A hardware configuration of the information processing apparatus 1 is the same as that of the first exemplary embodiment. Figs. 5A, 5B, 5C, and 5D are diagrams illustrating a palette and emptiness determination processing according to the present exemplary embodiment. Fig. 5A is a diagram illustrating a perspective view of the palette model, Fig. 5B is a diagram illustrating a top plan view of the palette model, Fig. 5C is a diagram illustrating a cross-sectional view of the palette model, and Fig. 5D is a diagram illustrating a positional relationship between the palette model and a distance measurement point. A palette model 500 is obtained from a palette 3 having a projected portion through modeling. An inner surface of the palette 500 consists of a total of eight surfaces, i.e., four vertical surfaces 501 (501-A, 501-B, 501-C, and 501-D), two inclined surfaces 502 (502-A and 502-B), and two horizontal surfaces 503 (503-A and 503-B). A boundary line 506-A is a boundary line between the inclined surfaces 502-A and 502-B, and a boundary line 506-B is a boundary line between the inclined surface 502-B and the horizontal surface 503-B.

In the present exemplary embodiment, the palette 3 is placed on a horizontal surface, and a total of four surfaces such as the inclined surfaces 502 inclined in a direction close to a direction 504 opposite to the gravitational direction and the horizontal surfaces 503 are set as the reference surfaces. Distance measurement points 507-A and 507-B are examples of distance measurement points obtained by measuring the surfaces of the component 2. The feet of vertical lines (perpendiculars) respectively extended from the distance measurement point 507-A to the inclined surface 502-B and the horizontal surface 503-B do not exist in the inside of the bounded reference surfaces

(surfaces having boundaries) 502-B and 503-B, whereas the foot of a vertical line extended from the distance measurement point 507-B to the horizontal surface 503-B exists in the inside of the bounded reference surface 503-B.

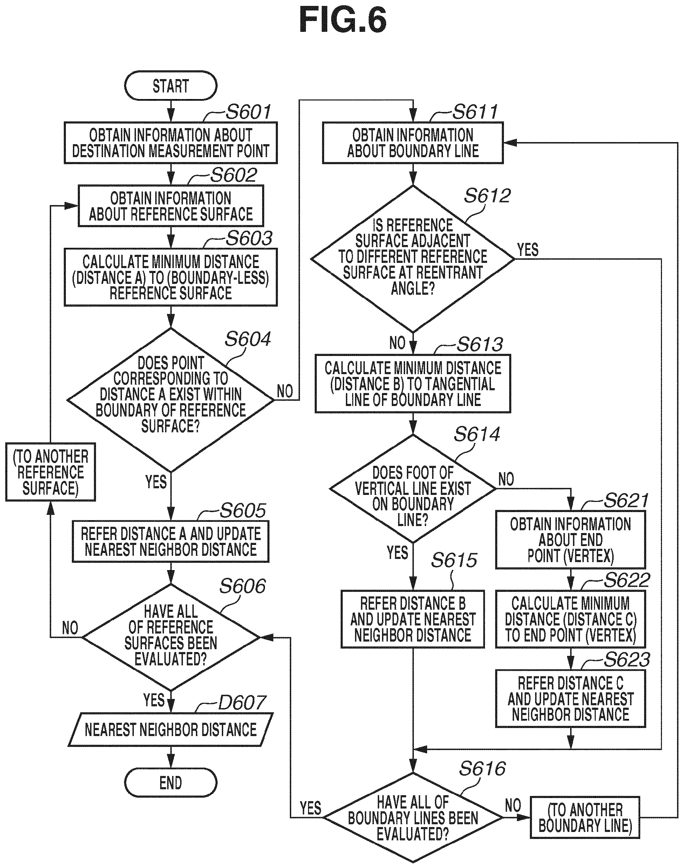

Fig. 6 is a flowchart illustrating a flow of processing for obtaining a nearest neighbor distance with respect to each distance measurement point. The processing is different from the processing described in the first present exemplary embodiment in that a nearest neighbor distance is obtained by referring to a boundary line or an end point of the reference surface if the feet of vertical lines extended to all of the reference surfaces do not exist in the inside of the bounded reference surfaces as in the case of the distance measurement point 507-A. In addition, emptiness determination processing after obtaining the nearest neighbor distance is similar to that of the first exemplary embodiment, and thus description thereof will be omitted. First, in step S601, the distance obtaining unit 12 obtains data of a distance measurement point. In step S602, one reference surface is selected from a plurality of reference surfaces previously set based on the structure and arrangement of the palette. Through the processing in steps S603 to S606, the information processing apparatus 1 determines whether a minimum distance between the distance measurement point and the reference surface exists in the inside of the bounded reference surface, and sets the minimum distance as the nearest neighbor distance if the minimum distance exists in the inside thereof. If the minimum distance does not exist in the inside of the bounded reference surface, the processing proceeds to step S611.

In step S603, a distance A as a minimum distance between the distance measurement point and the reference surfaces is obtained. Herein, if the reference surface is a plane surface, a length of the vertical line extended from the distance measurement point to the reference surface is taken as the distance A. If the reference surface is an analytical curved surface such as a spherical surface, a cylindrical surface, a conical surface, or a paraboloidal surface, a distance between a tangent point of a tangential surface that is in contact with that curved surface and a distance measurement point existing on a straight line overlapping with a normal line vector of the tangential surface may be obtained. Further, if the reference surface is a parametric curved surface or an adjustable curved surface, a method of obtaining a minimum value of a distance between each point belonging to the reference surface and a distance measurement point may be adopted. In this case, precision of emptiness determination can be ensured if a pitch of each point (pixel) is sufficiently smaller than a size of the component 2.

For example, a distance A between the distance measurement point 507-A and the inclined surface 502-B as a reference surface (curved surface) is a distance 509 between a tangent point of a tangential surface 508-A and the distance measurement point 507-A existing on a straight line overlapping with a normal line vector of the tangential surface 508-A. In addition, the reference surface constituting the palette model 500 may be set while a balance between precision of approximating a shape of the surface of the actual palette 3 and a calculation load is taken into consideration. For example, approximating the reference surface with a simple shape such as a plane surface may be disadvantageous in terms of the approximation precision but advantageous in terms of the calculation load. Approximating the reference surface with a parametric curved surface may be advantageous in terms of the approximation precision but disadvantageous in terms of the calculation load.

In step S604, the information processing apparatus 1 determines whether a point corresponding to the minimum distance (distance A) obtained in step S603 exists within a boundary of the reference surface (i.e., the inside of the bounded reference surface). The above determination can be executed based on the coordinate on the boundary-less or non-bounded reference surface existing in the minimum distance from the distance measurement point obtained in step S603. For example, if the reference surface is a plane surface, the information processing apparatus 1 determines whether a coordinate of the foot of the vertical line extended from the distance measurement point exists within the boundary of that plane surface (i.e., the inside of the bounded plane surface). If the coordinate exists within the boundary (YES in step S604), the processing proceeds to step S605, and if the coordinate does not exist within the boundary (NO in step S604), the processing proceeds to step S611.

For example, because the foot of the vertical line with respect to the distance A (distance 509) between the distance measurement point 507-A and the reference surface 502-B exists in the outside of the boundary of the reference surface 502-B, the processing proceeds to step S611 without adopting the value of the distance A.

In step S605, the information processing apparatus 1 refers to the distance A as a candidate of the nearest neighbor distance. In other words, the distance A is assigned as the nearest neighbor distance if another candidate of the nearest neighbor distance does not exist, and if another candidate exists, the nearest neighbor distance is updated with any one of the candidate and the distance A having a smaller value after the values thereof are compared to each other.

In step S606, the information processing apparatus 1 determines whether a distance to the distance measurement point has been evaluated with respect to all of the reference surfaces. If the reference surface which has not been referred exists (NO in step S606), the processing returns to step S602, so that the above-described processing is repeatedly executed on another reference surface. If evaluation of all of the reference surfaces has been completed (YES in step S606), a candidate of the nearest neighbor distance at this time is assigned as a nearest neighbor distance D607. Thereafter, the processing is ended. Similar to the first exemplary embodiment, emptiness determination can be executed by statistically processing the nearest neighbor distance D607 obtained at each of the distance measurement points.

Through the processing in steps S611 to S616, the minimum distance is obtained based on a boundary line as a boundary of the reference surface. In step S611, the information processing apparatus 1 selects one boundary line from unevaluated boundary lines that form boundaries of the reference surface, and obtains information (a numerical expression or a parameter) that describes the boundary line. In step S612, the information processing apparatus 1 determines whether the reference surface as a current evaluation target and a different reference surface adjacent thereto are mutually adjacent to each other at a reentrant angle across the entire region of the boundary line. If the reference surfaces are adjacent to each other at a reentrant angle (YES in step S612), the minimum distance between the boundary line and the distance measurement point is always greater than the minimum distance to that different reference surface, and cannot be the candidate of the nearest neighbor distance. Therefore, a distance between the boundary line and the distance measurement point does not have to be evaluated, so that the processing proceeds to step S616. If the reference surfaces are not adjacent to each other at a reentrant angle (NO in step S612), the processing proceeds to step S613. For example, a determination condition in step S612 is satisfied in a case where a distance measurement point is the distance measurement point 507-B, a reference surface is the inclined surface 502-B, and a boundary line is the boundary line 506-B.

In step S613, a minimum distance B between a distance measurement point and a boundary line is obtained. If the boundary line is a straight line, a length of a vertical line extended from the distance measurement point to the straight line is obtained. If the boundary line is an analytical curved line such as an arc line or a parabolic line, or a parametric curved line, the minimum distance can be analytically or approximately obtained through a method similar to the method of obtaining the minimum distance with respect to the surface which is described in step S603. For example, when a distance measurement point is the distance measurement point 507-A while a reference surface is the inclined surface 502-B, the boundary line 506-A between the inclined surface 502-B and the inclined surface 502-A is a boundary line that provides the distance B.

In step S614, the information processing apparatus 1 determines whether a point (a foot of the vertical line) corresponding to the distance B obtained in step S613 exists in a portion between both end points of the boundary line

(i.e., exists on a boundary line of a bounded surface). Different from the processing in step S604, in step S614, a boundary line is used instead of a reference surface. For example, the determination is executed based on a coordinate of each end point or a parameter of a boundary line indicating each end point. The point corresponding to the distance B described in step S613 satisfies the condition of step S614 (i.e., the point exists on a boundary line of a bounded surface). If the condition in step S614 is satisfied (YES in step S614), the processing proceeds to step S615. In step S615, the nearest neighbor distance is updated in a same manner as in step S605. However, the distance B is used instead of the distance A. If the condition in step S614 is not satisfied (NO in step S614), the processing proceeds to step S621. In step S621, information (coordinate) of each end point (vertex) of the boundary line is obtained. In step S622, after a distance between each end point and the distance measurement point is obtained, a minimum value of the obtained distances is obtained as a distance C. Subsequently, in step S623, update processing of the nearest neighbor distance similar to the update executed in step S605 is executed. At this time, the distance C is used instead of the distance A. When the update processing is executed in step S623, there may be a case where the end point (vertex) is shared by three reference surfaces.

After the processing is executed in step S615 or S623, in step S616, the information processing apparatus 1 determines whether all of the boundary lines included in the reference surface as a current evaluation target have been evaluated. If there is any unevaluated boundary line (NO in step S616), the processing returns to step S611, so that the processing is repeatedly executed on another boundary line from step S611. If all of the boundary lines are evaluated (YES in step S611), the processing proceeds to step S606.

In step S606, if the information processing apparatus 1 determines that evaluation of all of the reference surfaces is ended, a candidate of the nearest neighbor distance at this time is confirmed as the final nearest neighbor distance D607.

In the above-described processing, information about the boundary line is obtained every time the information is necessary with respect to the reference surface. However, in many cases, because the boundary line and the end point are shared by different reference surfaces, information about the boundary line and the end point may be previously obtained in step S601, so that the processing can be executed more efficiently. Further, as described above, when the reference surfaces are connected to each other at a reentrant angle, a distance from the boundary line or the end point thereof cannot be smaller than a distance from another reference surface different from the reference surface as an evaluation target. In such a case, evaluation of the distance between the boundary line or the end point thereof and the distance measurement point can be skipped or omitted.

As described above, according to the present exemplary embodiment, for example, it is possible to provide an information processing apparatus favorable for determining whether an object does not exist in a region where the object can be placed.

### <Exemplary Embodiment relating to Manufacturing Method of Articles>

The above-described measuring device 11 can be used in a state where the measuring device 11 is supported by a supporting member. For example, the measuring device 11 can be attached to the robot 4 (gripping apparatus) when used. Herein, a system including the information processing apparatus 1 and the robot 4 can be configured. The information processing apparatus 1, the robot 4, or the system can be used for a manufacturing method of articles. In step 1, the information processing apparatus 1 executes processing for recognizing a position and an orientation of the object 2, and a control unit of the robot 4 obtains the information about the position and the orientation obtained through the processing. In step 2, the robot 4 executes processing of the object 2 based on the information about the position and the orientation. In the above processing, for example, the object 2 is held and moved (i.e., translated or rotated) by a hand (a holding unit or an end effector) attached to a leading end of the robot 4. Alternatively, the object 2 is mounted on another object by the robot 4. Furthermore, the object 2 is processed by the robot 4. Through the above-described processing, an article (e.g., an electronic circuit board or a machine) configured of a plurality of objects (components) can be manufactured. In addition, the control unit of the robot 4 may include an arithmetic device such as a CPU and a storage device such as a memory. Further, the control unit that controls the robot 4 may be provided on the outside of the robot 4. Furthermore, measurement data or image data obtained by the distance measuring apparatus 10 can be displayed on the display unit such as the display 208.

### Other Embodiments

Embodiment(s) of the present invention can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)™), a flash memory device, a memory card, and the like.

While the present invention has been described with reference to embodiments, it is to be understood that the invention is not limited to the disclosed embodiments, but is defined by the scope of the following claims.

## Claims

1. An information processing apparatus comprising:
a first processor (30) configured to execute processing for obtaining information of a distance of a measurement target; and
a second processor (30) configured to obtain information of a distance between each of reference surfaces which represent a region, on which an object can be placed, and each of distance measurement points at which the information of the distance is obtained by the first processor, and execute processing of determination of whether any of the object are placed on the region.

2. The information processing apparatus according to claim 1, wherein the second processor is configured to determine whether any of the object are placed on the region based on a minimum value, with respect to each one of the distance measurement points, of distances each between each of the reference surfaces and the one of the distance measurement points.

3. The information processing apparatus according to claim 2, wherein the second processor is configured to assign a positive sign or a negative sign to each of the distances based on which side of each of the reference surfaces each of the distance measurement points exists on, and evaluate reliability of each of the distance measurement points based on the assigned sign.

4. The information processing apparatus according to any one of the preceding claims, wherein the second processor is configured to generate each of the reference surfaces as a plane surface or a curved surface.

5. The information processing apparatus according to any one of the preceding claims, wherein the region is a portion of a container (3) and the second processor is configured to generate a model which expresses the region as the reference surfaces.

6. The information processing apparatus according to claim 5,
wherein the first processor is configured to obtain the information of the distance of the measurement target based on image data from an imaging device configured to image the objects, and
wherein the second processor is configured to generate the model based on information of an optical axis of the imaging device.

7. The information processing apparatus according to claim 5 or 6, wherein the second processor is configured to generate the model based on information of position and orientation of the container (3).

8. The information processing apparatus according to claim 5, 6 or 7, wherein the second processor is configured to generate the model based on a direction of a gravitational force.

9. The information processing apparatus according to any one of the preceding claims, wherein two of the reference surfaces form a reentrant angle relative to each other.

10. The information processing apparatus according to any one of the preceding claims, wherein two surfaces of the reference surfaces form a salient angle relative to each other.

11. The information processing apparatus according to any one of the preceding claims, further comprising a display for executing display relating to the determination.

12. The information processing apparatus according to any one of the preceding claims, further comprising a measuring device (11) configured to obtain measurement data for obtaining the information of the distance of the measurement target.

13. The information processing apparatus according to any one of the preceding claims, wherein the second processor is configured to execute processing for recognition of a position and a posture of the object.

14. An information processing method comprising steps of:
executing a first processing of obtaining information of a distance of a measurement target; and
executing a second processing of obtaining information of a distance between each of reference surfaces which represent a region, on which an object can be placed, and each of distance measurement points at which the information of the distance is obtained in the first processing, and determining whether any of the object are placed on the region.

15. A program for causing a computer to execute each step of an information processing method defined in claim 14.

16. A system comprising:
an information processing apparatus defined in any one of claims 1 to 13; and
a robot (4) configured to hold and move the object based on information of the distance of the object obtained by the information processing apparatus.

17. A method of manufacturing an article, the method comprising steps of:
executing processing of obtaining information of a distance of an object using an information processing apparatus defined in any one of claims 1 to 13; and
processing the object, of which the information of the distance is obtained, to manufacture the article.
